# EUROPEAN PATENT SPECIFICATION

(11) **EP 3 800 413 B1**
(45) Date of publication and mention of the grant of the patent: **07.06.2023**
(21) Application number: 20197440.9
(22) Date of filing: 22.09.2020
(51) Int. Cl.: F26B 3/20, F26B 3/22, F26B 11/16, F26B 23/00, F26B 25/22

(54) **SLUDGE DRYING APPARATUS AND PROCESS**
VORRICHTUNG UND VERFAHREN ZUR SCHLAMMTROCKNUNG
APPAREIL ET PROCÉDÉ DE SÉCHAGE DES BOUES

(30) Priority: 03.10.2019 IT 201900017936
(43) Date of publication of application: 07.04.2021
(73) Proprietor: OSD System S.r.l., 42124 Reggio Emilia (IT)
(72) Inventor: MULAS, Angelo, 42124 REGGIO EMILIA (IT)
(74) Representative: Dondi, Silvia

(56) References cited:
- WO-A1-2018/083717
- KR-A- 20030 072 872
- US-A1- 2011 232 121
- US-A1- 2019 254 472

## Description

The present invention relates to an apparatus and a process for drying sludge, originating in particular from urban wastewater treatment plants, chemical-physical treatment plants or industrial processes in general. Mainly two types of dryers are used in drying plants: direct dryers, in which the sludge to be dried is lapped by hot air, and indirect driers, in which drying of the sludge takes place thanks to the thermal energy provided by a heating fluid through a separating wall.

In thermal drying of sludge, particular attention must be paid to energy consumption and the control of atmospheric emissions.

With regard to the control of atmospheric emissions, the problem tied to direct dryers lies in the considerable amount of air that comes into contact with the sludge, resulting in the need for abatement systems that are poorly effective but of considerable size and cost. In the second, indirect type of dryers, thanks to the separating wall through which the heat exchange takes place, the masses of fluids to be purified are much smaller and the abatement systems are thus less cumbersome, but at the same time more effective.

As regards energy consumption, solutions have been developed recently which provide for a recovery of the energy released during the drying processes. This energy recovery is used to supply external thermal users or feed the drying process itself.

In this context, various solutions are known. A first solution, proposed in US 6171499, and in similar terms in US 6138381, envisages the use of a single indirect drying stage wherein the recovery of energy serves to supply a user external to the drying process as such. Therefore, the drying system proposed in this solution does not have an energy recovery system unless it is included in a specifically adapted external system.

Another solution, proposed by document US2013/014678, envisages the use of a first indirect drying stage to pre-dry the sludge and a second direct drying stage for the final drying. The recovery of energy mainly takes place by incinerating a portion of the dried sludge to generate the thermal energy necessary for the machine.

This solution gives rise to at least two drawbacks: the use of a direct drying stage, which implies problems tied to atmospheric emissions, and the necessity of moving the sludge from the first stage to the second stage during its viscous phase (also known in the sector as the "sticky" phase), with a consequent reduction in plant efficiency. In fact, sludge with a degree of dryness comprised between 35% and 50% (i.e. in the intermediate drying phase, following the viscous phase) can be extremely tacky and sticky and thus difficult to extract, pump or transport.

A further solution, proposed by document WO2006/024696, envisages, in one of its embodiments, the use of a number of indirect dryers connected in cascade. This solution, too, gives rise to the problem of having to move the sludge during the viscous phase and a consequent poor efficiency of the plant.

US2011 /232121 A1, WO2018/083717 A1, KR2003 0072872 A and US2019/254472 A1 disclose other sludge drying apparatuses and methods according to the prior art.

In this context, the technical task at the basis of the present invention is to propose a sludge drying apparatus and process which overcome the drawbacks of the aforementioned prior art.

In particular, it is an object of the present invention to provide a sludge drying apparatus that is more efficient than the known solutions.

A further object of the present invention is to propose a sludge drying process that consumes little energy and, simultaneously, does not harm the environment with odorous emissions or toxic materials.

The stated technical task and specified objects are substantially achieved by a sludge drying apparatus according to claim 1.

The stated technical task and specified objects are substantially achieved by a sludge drying process according to claim 7.

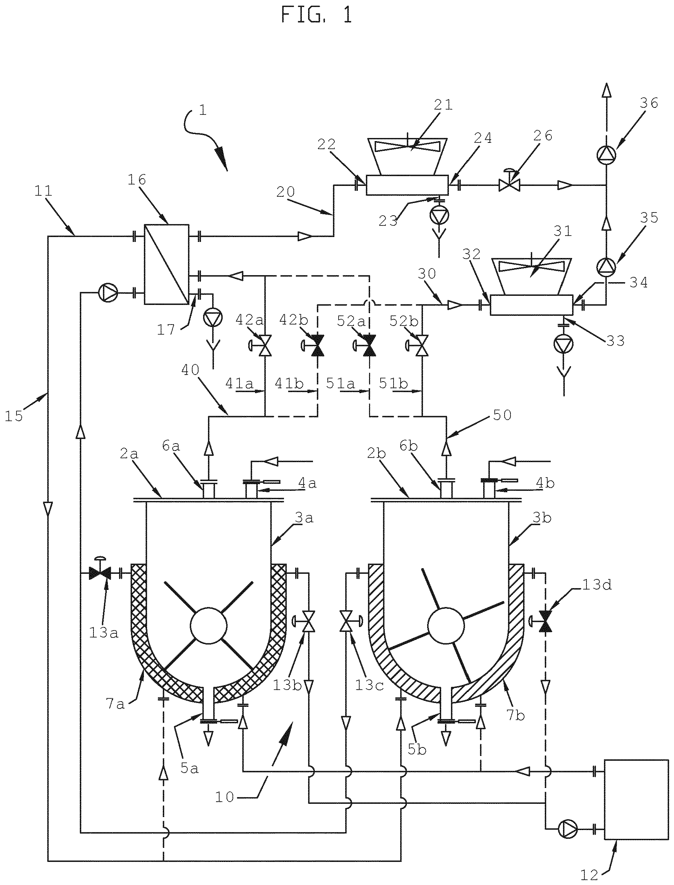

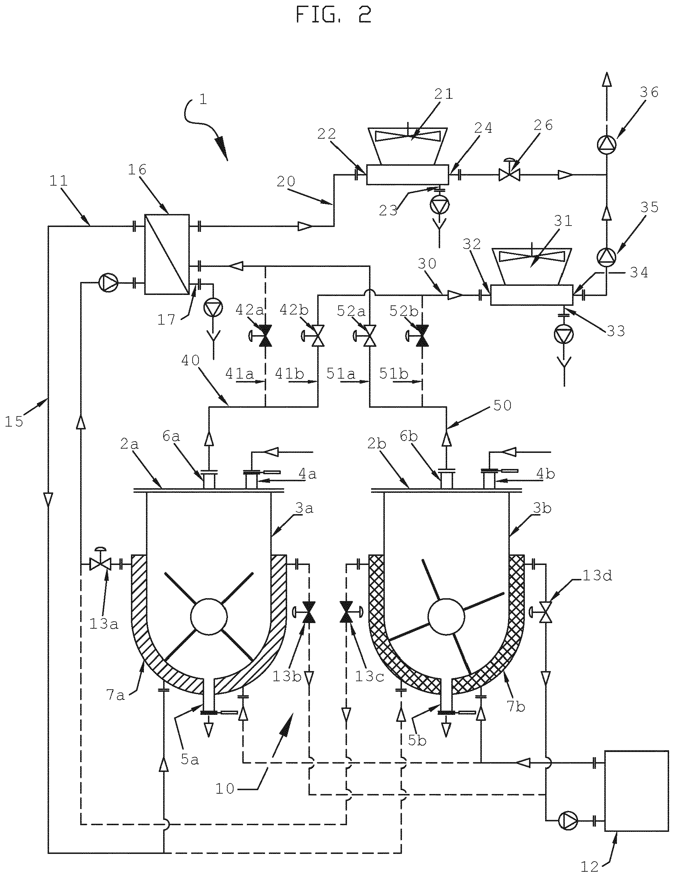

Additional features and advantages of the present invention will emerge more clearly from the approximate and thus non-limiting description of a preferred, but not exclusive, embodiment of a sludge drying apparatus and process, as illustrated in figures 1 and 2, which illustrate a diagram of a sludge drying apparatus in accordance with the present invention, in two different operating steps.

The following symbology is used in the figures:
- continuous lines indicate that the paths/flows are active;
- broken lines indicate that the paths/flows are interrupted;
- full (black) valves indicate a condition of "valve closed";
- empty valves indicate a condition of "valve open".

With reference to the figures, the number 1 indicates a sludge drying apparatus. The apparatus 1 comprises a first dryer 2a and a second dryer 2b of the indirect type.

Each indirect dryer 2a, 2b comprises:
- a casing-like body 3a, 3b having an inlet 4a, 4b for the wet sludge, a first outlet 5a, 5b for the dried sludge, and a second outlet 6a, 6b for the vapours;
- a heating jacket 7a, 7b fitted at least partially around the casing-like body 3a, 3b;
- a rotating mixer 8a, 8b inside the casing-like body 3a, 3b.

Preferably, the two dryers 2a, 2b are identical so that the drying process that will be described below is symmetrical, i.e. not unbalanced.

The apparatus 1 further comprises a first heating means 11 for heating one of the two jackets 7a, 7b so as to impose a pre-drying condition on one of the two dryers 2a, 2b.

In this context, "pre-drying condition" means a condition of heating at a temperature comprised between 90°C and 120°C.

The apparatus 1 further comprises a second heating means 12 for heating one of the two jackets 7a, 7b so as to impose a drying condition on one of the two dryers 2a, 2b.

In this context, "drying condition" means a condition of heating at a temperature comprised between 150°C and 250°C.

The wet sludge to be treated usually contains 25% dry matter. When it is subjected to a preliminary pre-drying treatment, the value of the dry matter present increases to values comprised between 30% and 40%. Finally, when the pre-dried sludge is subjected to a final drying treatment, the sludge reaches the final desired value, in general comprised between 70% and 95% dry matter.

Originally, the apparatus 1 further comprises a control system 10 configured to impose the pre-drying condition on the first dryer 2a and, simultaneously, the drying condition on the second dryer 2b, or vice versa. Vice versa here means that the control system 10 is configured also to impose the drying condition on the first dryer 2a and, simultaneously, the pre-drying condition on the second dryer 2b.

The control system 10 further comprises valve means 13a, 13c; 13b, 13d configured to enable the communication of the first heating means 11 with one of the two jackets 7a, 7b and of the second heating means 12 with the other jacket 7a, 7b.

Preferably, the first valve means comprise:
- a first pair of valves 13a, 13c associated with the first heating means 11;
- a second pair of valves 13b, 13d associated with the second heating means 12.

Each valve 13a, 13b, 13c, 13d is disposed in proximity to one of the two jackets 7a, 7b and is configurable in an open position, in which it enables communication between the corresponding heating means 11, 12 and the jacket 7a, 7b, and a closed position, in which it interrupts the communication.

For example, let us consider figure 2, in which the pre-drying condition is imposed on the first dryer 2a and the drying condition simultaneously on the second dryer 2b.

The control system 10 configures a valve of the first pair, indicated by the number 13a, in the open position thereof and a valve of the second pair, indicated by the number 13d, in the open position thereof.

In this manner, the first heating means 11 feeds the jacket 7a of the first dryer 2a by passing through the open valve 13a, so that a pre-drying condition is imposed on the first dryer 2a. The second heating means 12, by contrast, feeds the jacket 7b of the second dryer 2b by passing through the open valve 13d, so that a drying condition is imposed on the second dryer 2b.

Simultaneously, the control system 10 configures the other valve of the first pair, indicated by the number 13c, and the other valve of the second pair, indicated by the number 13b, in the closed position.

Figure 1 instead presents a step in which the operating conditions of the two dryers 2a, 2b are swapped over.

In fact, the control system 10 configures the valve 13a of the first pair, as well as the valve 13d of the second pair, in the closed position thereof. The valve 13c of the first pair and the valve 13b of the second pair are instead open.

The consequence is that the first heating means 11 feeds the jacket 7b of the second dryer 2b by passing through the open valve 13c, whilst the second heating means 12 feeds the jacket 7a of the first dryer 2a by passing through the open valve 13b.

Preferably, the second heating means 12 comprises an external heat source. For example, the external heat source is a generator. Preferably, the generator is of the natural gas-fired diathermic oil type.

During the sludge drying process, the sludge releases vapours due to the gradual evaporation of its liquid component. In particular, when the pre-drying condition is imposed on a dryer 2a, 2b, the sludge inside it undergoes a preliminary pre-drying treatment and releases vapours at a low temperature, usually ranging between 60 °C and 70 °C.

When the drying condition is instead imposed on the dryer 2a, 2b, the sludge undergoes a drying treatment and releases vapours at a high temperature, i.e. greater than or equal to 100 °C.

Advantageously, the first heating means 11 is fed with the high-temperature vapours generated inside one of the two dryers 2a, 2b, on which the drying condition is imposed. In other words, a large part of the energy released (net of the intrinsic recovery efficiency limits of the machine, for example due to heat dispersion) in the form of high-temperature vapours during the drying condition of one of the two dryers 2a, 2b is reused inside the apparatus 1 to feed the pre-drying condition, which is simultaneously imposed on the other dryer 2a, 2b.

The first heating means 11 comprises a circuit 15 for a heating fluid selectively communicating with the jackets 7a, 7b by means of the first pair of valves 13a, 13c. In particular, the heating fluid is a fluid suitable for the transmission of heat. For example, the fluid is diathermic oil.

In the embodiment described and illustrated here, a condenser 16 is disposed along the heating fluid circuit 15. Inside the condenser 16, a heat exchange occurs between the high-temperature vapours coming from one of the two dryers 2a, 2b and the heating fluid.

In particular, the condenser 16 is of the plate or tube bundle recovery type. The condenser 16 has a first outlet 17 for the condensate.

In an alternative embodiment (not illustrated) there are two condensers disposed along the heating fluid circuit 15.

Preferably, the apparatus 1 also comprises a first line 20 for the removal of the residual vapour exiting from the condenser 16.

The first line 20 comprises a dissipative air-cooled condenser 21 having an inlet 22 for the residual vapour exiting from the condenser 16, a first outlet 23 for the condensate and a second outlet 24 for the non-condensable residues.

A fan is preferably inserted downstream of the second outlet 24 for the removal of the non-condensable residues.

Advantageously, a control valve 26 is disposed along the line 20 in order to adjust the operating pressure of one of the two dryers 2a, 2b, on which the drying condition is imposed, so that it takes on values that are greater than or equal to atmospheric pressure. In particular, the control valve 26 is disposed downstream of the dissipative air-cooled condenser 21. Preferably, a second line 30 is also provided for the removal of the low-temperature vapours generated inside one of the two dryers 2a, 2b during the pre-drying condition.

The second line 30 comprises a dissipative air-cooled condenser 31 (also indicated as "second dissipative condenser" to distinguish it from the one of the first line) having an inlet 32 for the low-temperature vapour, a first outlet 33 for the condensate and a second outlet 34 for the non-condensable residues. Downstream of the second dissipative air-cooled condenser 31, a vacuum pump 35 and a fan for the removal of non-condensable residues are arranged in cascade.

In the embodiment described and illustrated here, the first line 20 for the removal of the residual vapour exiting from the condenser 16 and the second line 30 for the removal of the low-temperature vapours share a same fan 36.

The condensate present inside the condensers 16, 21, 31 is extracted from the condensate outlets 17, 23, 33 by means of specific pumps for the extraction and delivery of condensate from tanks both under positive pressure and under negative pressure, and pumped to the wastewater purification and disposal system (not illustrated).

The apparatus 1 further comprises a third and a fourth line 40, 50 for drawing vapours from the second vapour outlet 6a, 6b of the two dryers 2a, 2b.

Each line 40, 50 has two branches 41a, 41b and 51a, 51b, respectively communicating with the first heating means 11, in particular with the condenser 16, and with the second line 30 for the the removal of the low-temperature vapours.

Preferably, the branches 41a, 41b, 51a, 51b have second valve means 42a, 42b and 52a, 52b actuated by the same control system 10. The second valve means enable the selective communication of the different branches based on the condition imposed on the dryers.

In particular, let us consider figure 2, in which the pre-drying condition is imposed on the first dryer 2a. Simultaneously, the drying condition is imposed on the second dryer 2b. The low-temperature vapours generated inside the first dryer 2a are drawn from the second vapour outlet 6a thereof.

The control system 10 configures a valve, indicated by the number 42b, in the open position thereof so that the low-temperature vapours are sent from the first dryer 2a to the second line 30 for their removal. Simultaneously, the control system 10 configures a valve, indicated by the number 52a, in the open position thereof so that the high-temperature vapours are sent from the second dryer 2b to the condenser 16.

The other two valves indicated by the number 42a, 52b, by contrast, are closed in order to interrupt the associated flows along the branches in which they are inserted.

In figure 1, by contrast, the paths are inverted. The valves indicated as 42a, 52b are opened and the valves indicate as 42b, 52a are closed.

The sludge drying process, according to the present invention, is described below.

The process comprises a cycle regime which is explained step by step.

Let us consider starting from a step in which the pre-drying condition is imposed on the first dryer 2a so as to pre-dry the sludge contained therein, whereas the drying condition is simultaneously imposed on the second dryer 2b so as to dry the sludge contained therein.

When the sludge present in the second dryer 2b is dried, it is discharged from the first sludge outlet 5b of the second dryer 2b.

In this context, the sludge has completed drying when it has reached a degree of dry matter comprised between 70% and 95% of the total weight of the sludge. The exact value of the final degree of dry matter varies according to the use of the dried sludge and user preferences.

After the step of discharging the sludge from the second dryer 2b, new wet sludge is introduced through the sludge inlet 4b of the second dryer 2b. The second dryer 2b is then brought from the drying condition to the pre-drying condition so as to pre-dry the new wet sludge just introduced.

In the first dryer 2a, by contrast, when a degree of dry matter usually comprised between 35% and 45% of the total weight of the sludge is reached, the pre-drying of the sludge contained therein is defined as completed. The exact value is calculated by the control system 10 so as to maximise the energy recovery.

It should be highlighted that the degree of dry matter ensuring the highest efficiency tends to be within the range of the "sticky" phase. Thanks to the operating features of the two dryers, the sludge phase does not impose constraints in the passage from the pre-drying condition to the drying condition, it thus being possible to maximise the energy recovery.

The first dryer 2a is then made to pass into the drying condition so as to dry the pre-dried sludge present therein.

Advantageously, the passage of the first dryer 2a from the pre-drying condition to the drying condition and the passage of the second dryer 2b from the drying condition to the pre-drying condition at least partially overlap.

Preferably, the passage of one of the two dryers 2a, 2b from the pre-drying condition to the drying condition takes place simultaneously with the passage of the other dryer 2a, 2b from the drying condition to the pre-drying condition.

The process further comprises a step of recovering energy from the high-temperature vapours generated during the drying condition imposed on one of the two dryers 2a, 2b.

Advantageously, the energy recovery feeds the pre-drying condition simultaneously imposed on the other dryer 2a, 2b.

In the embodiment described and illustrated here, the energy recovery step takes place by means of a heat exchange, in a condenser 16, between the high-temperature vapours and the fluid communicating with the jackets 7a, 7b.

Preferably, in the cycle just described, the step of imposing a pre-drying condition on the first dryer 2a takes place at a negative pressure (for example between 200-300 mbar), whilst the step of imposing a drying condition on the second dryer 2b takes place at a pressure that is greater than or equal to atmospheric pressure.

Preferably, the pre-drying condition takes place at a temperature comprised between 90°C and 120°C.

Preferably, the drying condition takes place at a temperature comprised between 150°C and 250°C.

From the description provided, the features of a sludge drying apparatus and process, according to the present invention, appear clear, as do the advantages thereof.

In particular, the fact that the sludge remains in the same dryer from the start to the end of the drying process increases the efficiency of the process, since it is no longer necessary to move the sludge between two units. Consequently, the apparatus proposed is structurally simpler compared to the known solutions, as a cumbersome and costly pumping system is no longer necessary.

Furthermore, it is no longer necessary to control and limit the heating of the sludge during the pre-drying condition so that it does not go into in the "sticky" phase, which would make it difficult to handle.

Furthermore, the use of only indirect dryers results in an effective and relatively simple treatment of atmospheric emissions.

Furthermore, the recovery of energy is exploited within the drying process and this results in a simplification of the apparatus, since it no longer requires external systems or networks in order to reuse the heat recovered, as occurs, for example, in other systems with the installation of a district heating network.

In addition, the fact that the energy recovery feeds the pre-drying condition, together with the operation of the two dryers in alternating steps, results in a reduction in energy consumption of up to 50% compared to a traditional drying process without energy recovery.

Furthermore, the presence of the control valve makes it possible to regulate the operating pressure of the drying step, thus optimising the overall energy efficiency.

## Claims

1. A sludge drying apparatus (1) comprising:
• a first indirect dryer (2a) and a second indirect dryer (2b), each of which comprises:
- a casing-like body (3a; 3b) having an inlet (4a; 4b) for the wet sludge, a first outlet (5a; 5b) for the dried sludge, and a second outlet (6a; 6b) for the vapours;
- a heating jacket (7a; 7b) fitted at least partially around said casing-like body (3a; 3b);
- a rotating mixer (8a; 8b) inside the casing-like body (3a;3b);
• a first heating means (11) for heating one of the two jackets (7a, 7b) of the dryers (2a, 2b) so as to impose a pre-drying condition on one of them, i.e. a heating at a temperature comprised between 90°C and 120°C;
• a second heating means (12) for heating one of the two jackets (7a, 7b) of the dryers (2a, 2b) so as to impose a drying condition on one of them, i.e. a heating at a temperature comprised between 150°C and 250°C;
• a control system (10) configured to impose the pre-drying condition on the first dryer (2a) and simultaneously the drying condition on the second dryer (2b), or vice versa,
**characterized in that**
said control system (10) comprises first valve means (13a, 13c; 13b, 13d) configured to enable communication of the first heating means (11) with one of the two jackets (7a, 7b) and of the second heating means (12) with the other jacket (7a, 7b),
wherein said first valve means (13a, 13c; 13b, 13d) comprise:
- a first pair of valves (13a, 13c) associated with the first heating means (11);
- a second pair of valves (13b, 13d) associated with the second heating means (12),
each valve (13a, 13b, 13c, 13d) being disposed in proximity to one of the two jackets (7a, 7b) and configurable in an open position, in which it enables communication between the corresponding heating means (11, 12) and the corresponding jacket (7a, 7b), and a closed position, in which it interrupts said communication,
wherein said first heating means (11) is fed with high-temperature vapours generated inside one of the two dryers (2a, 2b) during the drying condition,
wherein said first heating means (11) comprises:
- a circuit (15) for a heating fluid selectively communicating with the jackets (7a, 7b) by means of said first pair of valves (13a, 13c);
- at least one condenser (16), disposed along said circuit (15), in which a heat exchange occurs between the high-temperature vapours coming from one of the two dryers (2a, 2b) and the heating fluid.

2. The apparatus (1) according to claim 1, wherein said heating fluid is diathermic oil.

3. The apparatus (1) according to claim 1 or 2, further comprising a first line (20) for the removal of the residual vapour exiting from said at least one condenser (16).

4. The apparatus (1) according to claim 3, wherein said first line (20) comprises a dissipative air-cooled condenser (21) for disposing of the residual vapour and a control valve (36) for adjusting the operating pressure of one of the two dryers (2a, 2b) during the drying condition so that it takes on values that are greater than or equal to atmospheric pressure.

5. The apparatus (1) according to claim 3 or 4, further comprising a second line (30) for the removal of the low-temperature vapours generated inside one of the two dryers (2a, 2b) during the pre-drying condition.

6. The apparatus (1) according to claim 5, wherein said second line (30) comprises a dissipative air-cooled condenser (31) for disposing of the low-temperature vapours exiting from the two dryers (2a, 2b).

7. A process for drying sludge by means of the apparatus (1) according to any one of the preceding claims, comprising a cycle regime composed of at least the following steps:
• imposing the pre-drying condition on the first dryer (2a) so as to pre-dry the sludge contained therein and simultaneously imposing the drying condition on the second dryer (2b) so as to dry the sludge contained therein;
• on reaching a degree of dry matter in the sludge of the second dryer (2b) comprised between 70% and 95% of the total weight of the sludge, discharging the dried sludge from the first outlet (5b) of the second dryer (2b);
• after having discharged the dried sludge from the second dryer (2b), introducing new wet sludge through the inlet (4b) of the second dryer (2b);
• bringing the second dryer (2b) from the drying condition to the pre-drying condition so as to pre-dry the new wet sludge just introduced;
• on reaching a degree of dry matter in the sludge of the first dryer (2a) comprised between 35% and 45% of the total weight of the sludge, bringing the first dryer (2a) from the pre-drying condition to the drying condition so as to dry the pre-dried sludge present therein,
said step of bringing the first dryer (2a) from the pre-drying condition to the drying condition at least partially overlapping the step of bringing the second dryer (2b) from the drying condition to the pre-drying condition.

8. The process according to claim 7, further comprising a step of recovering energy from the high-temperature vapours generated during the drying condition imposed on one of the two dryers (2a, 2b).

9. The process according to claim 8, wherein the recovery of energy feeds the pre-drying condition simultaneously imposed on the other dryer (2a, 2b).

10. The process according to any one of claims 7 to 9, wherein the step of imposing a pre-drying condition on the first dryer (2a) takes place at a negative pressure and the step of imposing a drying condition on the second dryer (2b) takes place at a pressure that is greater than or equal to atmospheric pressure.

## Patentansprüche

1. Vorrichtung zur Schlammtrocknung (1), umfassend:
• einen ersten indirekten Trockner (2a) und einen zweiten indirekten Trockner (2b), die jeweils umfassen:
- einen gehäuseartigen Körper (3a; 3b) mit einem Einlass (4a; 4b) für den Nassschlamm, einem ersten Auslass (5a; 5b) für den getrockneten Schlamm und einem zweiten Auslass (6a; 6b) für die Dämpfe;
- einen Heizmantel (7a; 7b), der zumindest teilweise um den gehäuseartigen Körper (3a; 3b) herum angebracht ist;
- einen rotierenden Mischer (8a; 8b) im Inneren des gehäuseartigen Körpers (3a; 3b);
• erste Heizmittel (11) zum Erhitzen eines der beiden Mäntel (7a, 7b) der Trockner (2a, 2b), um einem von ihnen einen Vortrocknungszustand aufzuerlegen, d. h. ein Erhitzen auf eine Temperatur zwischen 90 °C und 120 °C;
• zweite Heizmittel (12) zum Erhitzen eines der beiden Mäntel (7a, 7b) der Trockner (2a, 2b), um einem von ihnen einen Trocknungszustand aufzuerlegen, d. h. ein Erhitzen auf eine Temperatur zwischen 150 °C und 250 °C;
• ein Steuersystem (10), das ausgelegt ist, um den Vortrocknungszustand dem ersten Trockner (2a) und gleichzeitig den Trocknungszustand dem zweiten Trockner (2b) aufzuerlegen, oder umgekehrt,
**dadurch gekennzeichnet, dass** das Steuersystem (10) erste Ventilmittel (13a, 13c; 13b, 13d) umfasst, die ausgelegt sind, um eine Kommunikation der ersten Heizmittel (11) mit einem der beiden Mäntel (7a, 7b) und der zweiten Heizmittel (12) mit dem anderen Mantel (7a, 7b) zu ermöglichen,
wobei die ersten Ventilmittel (13a, 13c; 13b, 13d) umfassen:
- ein erstes Paar von Ventilen (13a, 13c), die mit den ersten Heizmitteln (11) assoziiert sind;
- ein zweites Paar von Ventilen (13b, 13d), das mit den zweiten Heizmitteln (12) assoziiert ist,
wobei ein jedes Ventil (13a, 13b, 13c, 13d) in der Nähe eines der beiden Mäntel (7a, 7b) angeordnet ist und in einer offenen Position, in der es eine Kommunikation zwischen den entsprechenden Heizmitteln (11, 12) und dem entsprechenden Mantel (7a, 7b) ermöglicht, und einer geschlossenen Position, in der es die Kommunikation unterbricht, auslegbar ist,
wobei die ersten Heizmittel (11) mit Hochtemperaturdämpfen gespeist werden, die während des Trocknungszustands in einem der beiden Trockner (2a, 2b) erzeugt werden,
wobei die ersten Heizmittel (11) Folgendes umfassen:
- einen Kreislauf (15) für ein Heizfluid, der mittels des ersten Paars von Ventilen (13a, 13c) selektiv mit den Mänteln (7a, 7b) kommuniziert;
- mindestens einen Kondensator (16), der entlang des Kreislaufs (15) angeordnet ist, in dem ein Wärmeaustausch zwischen den Hochtemperaturdämpfen, die von einem der beiden Trockner (2a, 2b) kommen, und dem Heizfluid stattfindet.

2. Vorrichtung (1) nach Anspruch 1, wobei das Heizfluid diathermisches Öl ist.

3. Vorrichtung (1) nach Anspruch 1 oder 2, ferner umfassend eine erste Leitung (20) zum Entfernen des aus dem mindestens einen Kondensator (16) austretenden Restdampfes.

4. Vorrichtung (1) nach Anspruch 3, wobei die erste Leitung (20) einen dissipativen luftgekühlten Kondensator (21) zum Entsorgen des Restdampfes und ein Steuerventil (36) zum Einstellen des Betriebsdrucks eines der beiden Trockner (2a, 2b) während des Trocknungszustands umfasst, so dass er Werte annimmt, die größer oder gleich dem Atmosphärendruck sind.

5. Vorrichtung (1) nach Anspruch 3 oder 4, ferner umfassend eine zweite Leitung (30) zum Entfernen der in einem der beiden Trockner (2a, 2b) während des Vortrocknungszustands erzeugten Niedertemperaturdämpfe.

6. Vorrichtung (1) nach Anspruch 5, wobei die zweite Leitung (30) einen dissipativen luftgekühlten Kondensator (31) zum Entsorgen der aus den beiden Trocknern (2a, 2b) austretenden Niedertemperaturdämpfe umfasst.

7. Verfahren zur Schlammtrocknung mittels der Vorrichtung (1) nach einem der vorhergehenden Ansprüche, umfassend ein Kreislaufregime, das sich aus mindestens den folgenden Schritten zusammensetzt:
• Auferlegen des Vortrocknungszustands auf den ersten Trockner (2a), um den darin enthaltenen Schlamm vorzutrocknen, und gleichzeitiges Auferlegen des Trocknungszustands auf den zweiten Trockner (2b), um den darin enthaltenen Schlamm zu trocknen;
• bei Erreichen eines Trockensubstanzgrads im Schlamm des zweiten Trockners (2b), der zwischen 70 % und 95 % des Gesamtgewichts des Schlamms liegt, Austragen des getrockneten Schlamms aus dem ersten Auslass (5b) des zweiten Trockners (2b);
• nach dem Austragen des getrockneten Schlamms aus dem zweiten Trockner (2b), Einführen von neuem Nassschlamm durch den Einlass (4b) des zweiten Trockners (2b);
• Bringen des zweiten Trockners (2b) von dem Trocknungszustand in den Vortrocknungszustand, um den gerade eingeführten neuen Nassschlamm vorzutrocknen;
• bei Erreichen eines Trockensubstanzgrads im Schlamm des ersten Trockners (2a), der zwischen 35 % und 45 % des Gesamtgewichts des Schlamms liegt, Bringen des ersten Trockners (2a) von dem Vortrocknungszustand in den Trocknungszustand, um den darin vorhandenen vorgetrockneten Schlamm zu trocknen,
wobei der Schritt zum Bringen des ersten Trockners (2a) von dem Vortrocknungszustand in den Trocknungszustand den Schritt zum Bringen des zweiten Trockners (2b) von dem Trocknungszustand in den Vortrocknungszustand zumindest teilweise überlappt.

8. Verfahren nach Anspruch 7, ferner umfassend einen Schritt zum Rückgewinnen von Energie aus den Dämpfen hoher Temperatur, die während des Trocknungszustands erzeugt werden, der einem der beiden Trockner (2a, 2b) auferlegt wird.

9. Verfahren nach Anspruch 8, wobei die Energierückgewinnung den Vortrocknungszustand versorgt, die gleichzeitig dem anderen Trockner (2a, 2b) auferlegt wird.

10. Verfahren nach einem der Ansprüche 7 bis 9, wobei der Schritt zum Auferlegen eines Vortrocknungszustands auf den ersten Trockner (2a) bei einem negativen Druck stattfindet und der Schritt zum Auferlegen eines Trocknungszustands auf den zweiten Trockner (2b) bei einem Druck stattfindet, der größer oder gleich dem Atmosphärendruck ist.

## Revendications

1. Appareil de séchage (1) des boues, comprenant :
• un premier sécheur indirect (2a) et un deuxième sécheur indirect (2b), chacun comprenant :
- un corps en forme de cuve (3a ; 3b), comportant une entrée (4a ; 4b) pour les boues humides, une première sortie (5a ; 5b) pour les boues séchées, et une deuxième sortie (6a ; 6b) pour les vapeurs ;
- une chemise chauffante (7a ; 7b) montée au moins partiellement autour dudit corps en forme de cuve (3a ; 3b) ;
- un mélangeur rotatif (8a ; 8b) à l'intérieur du corps en forme de cuve (3a ; 3b) ;
• des premiers moyens de chauffage (11) pour chauffer l'une des deux chemises (7a, 7b) des sécheurs (2a, 2b) de sorte à imposer une condition de pré-séchage à l'une d'entre eux, c'est-à-dire un chauffage à une température comprise entre 90 et 120 °C ;
• des deuxièmes moyens de chauffage (12) pour chauffer l'une des deux chemises (7a, 7b) des sécheurs (2a, 2b) afin d'imposer à l'une d'entre eux une condition de séchage, c'est-à-dire un chauffage à une température comprise entre 150 et 250 °C ;
• un système de commande (10) configuré pour imposer la condition de pré-séchage au premier sécheur (2a) et simultanément la condition de séchage au deuxième sécheur (2b), ou vice versa,
**caractérisé en ce que** ledit système de commande (10) comprend des premiers moyens de vanne (13a, 13c; 13b, 13d) configurés pour permettre la communication des premiers moyens de chauffage (11) avec l'une des deux chemises (7a, 7b) et des deuxièmes moyens de chauffage (12) avec l'autre chemise (7a, 7b),
dans lequel lesdits premiers moyens de vanne (13a, 13c; 13b, 13d) comprennent :
- une première paire de vannes (13a, 13c) associée aux premiers moyens de chauffage (11) ;
- une deuxième paire de vannes (13b, 13d) associée aux deuxièmes moyens de chauffage (12),
chaque vanne (13a, 13b, 13c, 13d) étant disposée à proximité de l'une des deux chemises (7a, 7b) et pouvant être configurée dans une position d'ouverture, dans laquelle elle permet la communication entre les moyens de chauffage correspondants (11, 12) et la chemise correspondante (7a, 7b), et dans une position de fermeture, dans laquelle elle interrompt ladite communication,
dans lequel lesdits premiers moyens de chauffage (11) sont alimentés par des vapeurs à haute température générées à l'intérieur de l'un des deux sécheurs (2a, 2b) pendant la phase de séchage,
dans lequel lesdits premiers moyens de chauffage (11) comprennent :
- un circuit (15) pour un fluide de chauffage communiquant sélectivement avec les chemises (7a, 7b) au moyen de ladite première paire de vannes (13a, 13c) ;
- au moins un condensateur (16), disposé le long dudit circuit (15), dans lequel se produit un échange de chaleur entre les vapeurs à haute température, provenant de l'un des deux sécheurs (2a, 2b), et le fluide de chauffage.

2. Appareil (1) selon la revendication 1, dans lequel le fluide chauffant est une huile diathermique.

3. Appareil (1) selon la revendication 1 ou 2, comprenant de plus une première ligne (20) pour l'élimination de la vapeur résiduelle sortant dudit au moins un condensateur (16).

4. Appareil (1) selon la revendication 3, dans lequel ladite première ligne (20) comprend un condensateur dissipatif (21) refroidi par air pour l'élimination de la vapeur résiduelle et une vanne de régulation (36) pour ajuster la pression de fonctionnement de l'un des deux sécheurs (2a, 2b) pendant la condition de séchage afin qu'elle prenne des valeurs supérieures ou égales à la pression atmosphérique.

5. Appareil (1) selon la revendication 3 ou 4, comprenant de plus une deuxième ligne (30) pour l'élimination des vapeurs à basse température générées à l'intérieur de l'un des deux sécheurs (2a, 2b) pendant la condition de pré-séchage.

6. Appareil (1) selon la revendication 5, dans lequel ladite deuxième ligne (30) comprend un condensateur dissipatif (31) refroidi par air pour éliminer les vapeurs à basse température sortant des deux sécheurs (2a, 2b).

7. Procédé de séchage des boues au moyen de l'appareil (1) selon l'une quelconque des revendications précédentes, comprenant un régime cyclique composé au moins des étapes suivantes :
• imposer la condition de pré-séchage au premier sécheur (2a) de manière à pré-sécher les boues qu'il contient et imposer simultanément la condition de séchage au deuxième sécheur (2b) de manière à sécher les boues qu'il contient ;
• après avoir atteint un degré de matière sèche dans les boues du deuxième sécheur (2b) compris entre 70 et 95 % du poids total des boues, évacuer les boues séchées par la première sortie (5b) du deuxième sécheur (2b) ;
• après avoir évacué les boues séchées du deuxième sécheur (2b), introduire de nouvelles boues humides par l'entrée (4b) du deuxième sécheur (2b) ;
• faire passer le deuxième sécheur (2b) de la condition de séchage à la condition de pré-séchage de manière à pré-sécher les nouvelles boues humides qui viennent d'être introduites ;
• après avoir atteint un degré de matière sèche dans les boues du premier sécheur (2a) compris entre 35 et 45 % du poids total des boues, faire passer le premier sécheur (2a) de la condition de pré-séchage à la condition de séchage afin de sécher les boues pré-séchées qui s'y trouvent,
ladite étape consistant à faire passer le premier sécheur (2a) de la condition de pré-séchage à la condition de séchage chevauche au moins partiellement l'étape consistant à faire passer le deuxième sécheur (2b) de la condition de séchage à la condition de pré-séchage.

8. Procédé selon la revendication 7, comprenant de plus une étape consistant à récupérer l'énergie à partir des vapeurs à haute température générées pendant la condition de séchage imposée à l'un des deux sécheurs (2a, 2b).

9. Procédé selon la revendication 8, dans lequel la récupération d'énergie alimente la condition de pré-séchage imposée simultanément à l'autre sécheur (2a, 2b).

10. Procédé selon l'une quelconque des revendications 7 à 9, dans lequel l'étape consistant à imposer une condition de pré-séchage au premier sécheur (2a) se déroule à une pression négative et l'étape consistant à imposer une condition de séchage au deuxième sécheur (2b) se déroule à une pression supérieure ou égale à la pression atmosphérique.
